(19) Europäisches Patentamt
European Patent Office
Office européen des brevets

(11) **EP 3 748 497 A1**

(12) **EUROPÄISCHE PATENTANMELDUNG**

(43) Veröffentlichungstag:
**09.12.2020 Patentblatt 2020/50**

(51) Int Cl.:
**G06F 9/50** *(2006.01)* **H04L 29/08** *(2006.01)*
**H04W 4/02** *(2018.01)*

(21) Anmeldenummer: **19178234.1**

(22) Anmeldetag: **04.06.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Huth, Hans-Peter**
**80638 München (DE)**
• **Zeiger, Florian**
**85635 Höhenkirchen-Siegertsbrunn (DE)**

(54) **VERFAHREN ZUM BEREITSTELLEN VON COMPUTERRESSOURCEN, VERWALTUNGSEINHEIT ZUM DURCHFÜHREN EINES VERFAHRENS, COMPUTERPROGRAMMPRODUKT SOWIE ELEKTRONISCH LESBARER DATENTRÄGER**

(57) Die Erfindung betrifft ein Verfahren zum Bereitstellen von Computerressourcen eines Computernetzwerkverbunds (N) an wenigstens eine sich an einem Standort (P) befindende Recheneinrichtung (C), wobei der Computernetzwerkverbund (N) durch wenigstens zwei Netzwerkinstanzen ($K_i$) gebildet wird, welche jeweils relativ zu dem Standort (P) beweglich sind und jeweils zumindest eine Teilressource der Computerressourcen bereitstellen, mit den Schritten:

- Erfassen einer Relativbewegung (T) und/oder eines Leistungswerts wenigstens einer der Netzwerkinstanzen ($K_i$); (S1)
- Erfassen eines Bedarfswerts und eines Zeitintervalls; (S2)

- Ermitteln einer jeweiligen Instanzenverfügbarkeit in Abhängigkeit von zumindest der jeweiligen Relativbewegung (T) und/oder dem jeweiligen Leistungswert; (S3)
- Ermitteln einer Gesamtverfügbarkeit in Abhängigkeit von der jeweiligen Instanzenverfügbarkeit der für die Recheneinrichtung verfügbaren Computerressourcen; (S4) und
- Bereitstellen zumindest eines Teils der verfügbaren Computerressourcen an die Recheneinrichtung (C) in Abhängigkeit von dem Bedarfswert und/oder der Gesamtverfügbarkeit. (S5)
Ferner betrifft die Erfindung eine Verwaltungseinheit, ein Computerprogramm und einen Datenträger.

FIG 1

**Beschreibung**

Die Erfindung betrifft ein Verfahren zum Bereitstellen von Computerressourcen eines Computernetzwerkverbunds gemäß dem Patentanspruch 1, eine Verwaltungseinheit zum Durchführen eines Verfahrens gemäß dem Patentanspruch 7, ein Computerprogramm gemäß dem Patentanspruch 9 sowie einen elektronisch lesbaren Datenträger gemäß dem Patentanspruch 10.

Aktuelle Überlegungen befassen sich damit, das Internet beispielsweise mittels Satelliten weltweit zur Verfügung stellen zu können. Dabei zielen jüngste Entwicklungen auf Satellitensysteme ab, welche eine große Anzahl von Satelliten bereitstellen, die einen Kommunikationszugang zu entfernten Orten mit globaler Abdeckung ermöglichen. Dabei ist bei Satelliten, wie generell in der Entwicklung der Elektronik, so, dass Hardware immer leistungsfähiger wird. So können Satelliten über merkliche Ressourcen, wie beispielsweise Speicher oder Rechenleistung für Rechenaufgaben, verfügen. Des Weiteren wird auch über den Einsatz von Drohnen und Ballonen für eine Abdeckung schwer zugänglicher Regionen mit Internet diskutiert.

Ferner bauen immer mehr Anwendungen darauf auf, dass sie statt auf einem lokalen Computer in einer so genannten Wolke (Cloud), einem Verbund mehrerer Computer beziehungsweise Recheneinrichtungen in einem Netzwerk, durchgeführt werden. Dabei ist eine Cloud in der Regel so aufgebaut, dass sie das Internet beziehungsweise ein alternatives Netzwerk nutzt, um verschiedene Rechenzentren zu verbinden beziehungsweise zu integrieren, welche Computerressourcen, insbesondere in Form von Rechenkapazität anbieten. Somit geschieht eine Integration verschiedener Standorte zu virtuellen Rechenumgebungen, welche von Anwendungen benötigte Ressourcen insbesondere je nach Bedarf bereitstellen. Dabei wird häufig auf Redundanz und Skalierbarkeit geachtet, sowohl bei den Rechenzentren als auch bei in den Rechenzentren stationierten Recheneinrichtungen. Skalierbarkeit heißt beispielsweise eine Anwendung auf leistungsfähige Ressourcen zu verschieben, beispielsweise falls ihr Ressourcenbedarf im Laufe der Zeit steigt oder dass der Ressourcenpool der Cloud, beispielsweise durch Zusammenschluss weiterer Rechenzentren, erweitert wird. Ferner sind die Rechenzentren häufig untereinander so vernetzt, dass die Netzwerkverbindungen zwischen den Rechenzentren eine besonders hohe Datenübertragungsrate und eine geringe Latenz aufweisen.

Dabei ist die Cloud zum Bereitstellen von Computerressourcen bisher durch einen statischen Ressourcenpool beziehungsweise lokal an einem Standort platzierte Rechenzentren ausgebildet.

Eine Variante der Cloud ist die so genannten Mobile Edge Cloud (mobile Randwolke), die beispielsweise von den kommenden 5G-Mobilfunknetzen angetrieben werden soll. Dabei sollen Dienste, also Angebote beispielsweise von Rechenleistung, in der Nähe eines Endgeräts, beispielsweise eines Mobiltelefons und/oder eines Internet der Dinge Geräts (IoT-Device), platziert werden, die diese Dienste benutzen. Dabei wird bei der Mobile Edge Cloud wenigstens eine feste Basisstation mit lokalisierten Servern und Festnetzverbindungen zwischen diesen auf der einen Seite und einer schnellen 5G-Funkschnittstelle für die Endgeräte auf der anderen Seite betrieben.

Gemeinsam ist sowohl der Cloud als auch der (Mobile) Edge Cloud, dass sie auf stationärer Hardware aufgebaut sind, welche einen Ressourcenpool bildet. Dynamische Aspekte werden lediglich durch den Einsatz von Virtual Private Cloud Umgebungen auf dem Hardwarepool eingeführt, sodass beispielsweise Leistungskennzahlen (KPI, Key Performance Indicator) erfüllt werden können.

Ein hochdynamischer Ressourcenpool, welcher Cloud-Lösungen bereitstellt, ist nicht bekannt.

Aufgabe der vorliegenden Erfindung ist es daher, ein Verfahren, eine Verwaltungseinheit, ein Computerprogramm sowie einen Datenträger bereitzustellen, durch welche es möglich ist, sich relativ zu einem Standort bewegende Netzwerkinstanzen eines Computernetzwerkverbunds derart zu betreiben, dass an dem Standort eine möglichst effiziente Bereitstellung von Computerressourcen des Computernetzwerkverbunds möglich ist.

Diese Aufgabe wird durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein erfindungsgemäßes Verfahren zum Bereitstellen von Computerressourcen eines Computernetzwerkverbunds an wenigstens eine sich an einem Standort befindende Recheneinrichtung. Die, insbesondere elektronische, Recheneinrichtung kann beispielsweise als eine Komponente eines Internet der Dinge Geräts (IoT-Device, Internet of Things) ausgebildet sein. Beispielsweise kann sich die Recheneinrichtung in einem Gebäude, Flugzeug, Schiff und/oder Auto befinden. Dabei kann der Standort insbesondere relativ zur Erde ortsfest sein, das heißt, der Standort ändert sich nicht. Für den Fall beispielsweise eines Schiffes, Autos oder Flugzeugs kann sich der Standort beispielsweise jedoch relativ zur Erde ändern. Die Recheneinrichtung ist bei dem erfindungsgemäßen Verfahren nicht Teil des Computernetzwerkverbunds, weist aber wie der Computernetzwerkverbund jedoch Kommunikationsmittel auf, sodass eine Kommunikation, insbesondere in Form eines Datenaustausches, zwischen der Recheneinrichtung und dem Computernetzwerkverbund ermöglicht ist. Der Computernetzwerkverbund wird durch wenigstens zwei Netzwerkinstanzen gebildet, welche jeweils relativ zu dem Standort beweglich sind, insbesondere dynamisch und/oder besonders schnell. Darüber hinaus sind die Netzwerkinstanzen auch relativ zueinander beweglich, sodass die Netzwerkinstanzen jeweils zu einem bestimmten Zeitpunkt eine bestimmte Topologie aufweisen. Ferner stellt die jeweilige Netzwerkinstanz jeweils zumindest eine Teilressource der Computerressourcen des Computernetzwerkverbunds bereit. Die jeweilige Netzwerkinstanz ist beispielsweise jeweils als jeweilige Recheneinrichtung ausgebildet und kann ferner beispielsweise eine Komponente eines Satelliten, einer Drohne und/oder eines Ballons sein.

Um mittels des erfindungsgemäßen Verfahrens die Computerressourcen der Recheneinrichtung besonders vorteilhaft bereitstellen zu können, umfasst das Verfahren mehrere Schritte: In einem ersten Schritt des Verfahrens erfolgt ein Erfassen einer Relativbewegung wenigstens einer der Netzwerkinstanzen, beispielsweise insbesondere durch eine Verwaltungseinheit, welche beispielsweise selbst als Recheneinrichtung ausgebildet ist. Die Relativbewegung ist relativ zum Standort und kann insbesondere als Trajektorie beschreibbar sein und insbesondere einer Relativposition umfassen. Zusätzlich oder alternativ erfolgt in dem ersten Schritt des Verfahrens ein Erfassen wenigstens eines Leistungswerts, welcher die, insbesondere aktuell verfügbare, Teilressource wenigstens einer der Netzwerkinstanzen charakterisiert. Mit anderen Worten stellt die jeweilige Netzwerkinstanz ihre Trajektorie und/oder ihre für die Teilressource der Computerressourcen verfügbare, beispielsweise Rechenleistung und/oder Speichergröße, insbesondere zum Abruf durch die weiteren Netzwerkinstanzen und/oder beispielsweise die Verwaltungseinheit, bereit. Diese bereitgestellten Daten, welche die Trajektorie, also die Relativbewegung, und/oder den Leistungswert charakterisieren, sind somit empfangbar und/oder erfassbar, wodurch die dadurch gewonnene Information zur Durchführung des Verfahrens bereitsteht.

In einem zweiten Schritt des Verfahrens erfolgt das Erfassen eines Bedarfswerts, welcher einen Bedarf an zumindest einem Teil der Computerressourcen für eine auf der Recheneinrichtung am Standort durchgeführte Anwendung charakterisiert. Ferner erfolgt das Erfassen eines Zeitintervalls, innerhalb dessen der Bedarf durch die Recheneinrichtung vorhanden ist. Bei der Anwendung handelt es sich beispielsweise um ein Computerprogramm, welches auf der Recheneinrichtung durchzuführen ist, beziehungsweise an dem Standort beziehungsweise der Recheneinrichtung Informationen zur Verfügung stellen soll, welche durch beispielsweise Berechnungen anhand der Computerressourcen gewonnen werden sollen. Mit anderen Worten kann beispielsweise eine Anfrage durch die Recheneinrichtung durchgeführt werden, dass diese zu einem bestimmten Zeitpunkt beziehungsweise für ein bestimmtes Zeitintervall eine Berechnung mittels der Computerressourcen beziehungsweise zumindest eines Teils der Computerressourcen durchführen will, wobei diese Anfrage empfangbar ist und erfasst wird.

In einem dritten Schritt des Verfahrens erfolgt ein Ermitteln einer jeweiligen Instanzenverfügbarkeit, welche den durch die jeweilige Netzwerkinstanz zur Verfügung stellbaren Teil der Teilressource der jeweiligen Netzwerkinstanz an dem Standort für wenigstens einen Zeitpunkt in dem Zeitintervall charakterisiert. Dabei erfolgt das Ermitteln in Abhängigkeit von zumindest der jeweiligen Relativbewegung und/oder dem jeweiligen Leistungswert der jeweiligen Netzwerkinstanz. Zusätzlich oder alternativ kann bei dem Ermitteln der jeweiligen Instanzenverfügbarkeit auch beispielsweise eine bereits auf der Netzwerkinstanz laufende beziehungsweise durch die Netzwerkinstanz durchgeführte weitere Anwendung berücksichtigt werden. Somit beschreibt die jeweilige Instanzenverfügbarkeit, zu welchem Zeitpunkt auf welchen Teil der Teilressourcen durch beispielsweise die Recheneinrichtung oder eine weitere Recheneinrichtung, insbesondere an dem Standort, zurückgegriffen werden kann.

In einem vierten Schritt des Verfahrens erfolgt ein Ermitteln einer Gesamtverfügbarkeit in Abhängigkeit von der jeweiligen Instanzenverfügbarkeit der für die Recheneinrichtung verfügbaren Computerressourcen, insbesondere für einen jeweiligen Zeitpunkt, wobei insbesondere beispielsweise die Schritte 1 bis 4 beziehungsweise insbesondere die Schritte 3 und 4 für weitere Zeitpunkte wiederholt werden, sodass vorteilhafterweise für einen möglichst großen Zeitbereich innerhalb des Zeitintervalls die für einen jeweiligen Zeitpunkt verfügbare Gesamtverfügbarkeit bekannt ist.

Schließlich wird in einem fünften Schritt des Verfahrens zumindest ein Teil der verfügbaren Computerressourcen an die Recheneinrichtung in Abhängigkeit von dem Bedarfswert und/oder der Gesamtverfügbarkeit bereitgestellt. Dabei erfolgt das Bereitstellen insbesondere zumindest über eine jeweilige Schnittstelle, beispielsweise die Kommunikationsmittel, der jeweiligen Netzwerkinstanz.

Durch das Verfahren ist es nun möglich, dass zumindest ein Teil der Computerressourcen der Computernetzwerkinfrastruktur beziehungsweise, welche ein Zusammenschluss der Netzwerkinstanzen ist, also des Computernetzwerkverbunds, somit quasi typische Cloud-Aufgaben des Cloud-Computing lösen kann. Somit kann durch das Verfahren ein dynamischer Computernetzwerkverbund als eine Rechenwolke beziehungsweise Datenwolke, welche eine IT-Infrastruktur darstellt, betrieben werden, welche beispielsweise die Computerressourcen über ein Computernetzwerk beziehungsweise insbesondere eine Datenverbindung bereitstellt. Dabei kann beispielsweise somit durch den Computernetzwerkverbund Rechenleistung, die Zuweisung von Speicher für Datenverarbeitung, die Speicherung von Ergebnissen und eine Kommunikationsfähigkeit beispielsweise bereitgestellt werden. Dabei kann die jeweilige Netzwerkinstanz beispielsweise insbesondere als Knoten beziehungsweise Netzwercknoten betrachtet werden. So kann der Computernetzwerkverbund als eine Menge von Knoten mit bestimmten Fähigkeiten, welche durch die jeweilige Teilressource bestimmt sind, beschrieben werden, wobei sich die Netzwerkinstanzen, also die Knoten, relativ zu dem Standort der Recheneinrichtung und insbesondere relativ zu anderen Knoten des Computernetzwerkverbundes, welche den Bedarf an zumindest einem Teil der Computerressourcen anmeldet, bewegen.

Bei dem Verfahren werden insbesondere beispielsweise, um die Computerressourcen besonders vorteilhaft bereitzustellen, die Netzwerkinstanzen entsprechend beispielsweise konfiguriert und/oder verwaltet, was insbesondere beispielsweise durch die Verwaltungseinheit geschieht, welche insbesondere zentralisiert oder dezentralisiert ausgebildet sein kann. Dabei wird eine Anfrage des Bedarfs, insbesondere in Form des Bedarfswerts, verarbeitet, wobei in den Schritten 1 bis 4 des Verfahrens zusammenfassend folgende Informationen verarbeitet werden: Zum einen werden, um das Verfahren vorteilhaft zu betreiben, die Trajektorien beziehungsweise Relativbewegungen zu dem Standort der Knoten, also der Netzwerkinstanzen, sowie deren Fähigkeiten beziehungsweise Teilressourcen erfasst beziehungsweise ermittelt. Die auf der Recheneinrichtung durchgeführte Anwendung kündigt quasi eine Ressourcenanforderung, insbesondere in Form des Bedarfswerts, welcher die benötigten Teilressourcen beziehungsweise den benötigten Teil an den Computerressourcen definiert, an, wobei sie durch ihren Standort zusätzlich einen Geolokalisierungsort definiert, an der zumindest ein Teil der Computerressourcen benötigt wird. Bei der Ermittlung der jeweiligen Instanzenverfügbarkeit der jeweiligen Netzwerkinstanz wird dies berücksichtigt, da insbesondere beispielsweise eine Kommunikation über die Schnittstelle zwischen der jeweiligen Netzwerkinstanz und der sich am Standort befindenden Recheneinrichtung beispielsweise nur über eine bestimmte Reichweite möglich ist. So kann beispielsweise der die jeweilige Netzwerkinstanz charakterisierende Leistungswert auch eine Kommunikationsreichweite umfassen, wodurch beispielsweise genau bestimmt werden kann, zu welchen Zeitpunkten in dem Zeitintervall eine Kommunikation zwischen der Recheneinrichtung und der jeweiligen Netzwerkinstanz möglich ist. Für den Fall, dass sich der Standort der Recheneinrichtung relativ zur Erde bewegt, kann dies derart berücksichtigt werden, dass die in dem Zeitintervall zurückgelegte Strecke des Standorts mit der jeweiligen Kommunikationsreichweite der jeweiligen Netzwerkinfrastruktur berücksichtigt wird, beispielsweise insbesondere durch Addition oder Subtraktion.

Somit ist es durch das erfindungsgemäße Verfahren möglich, einen, insbesondere besonders dynamischen, Ressourcenpool für Computerressourcen in Form des Computernetzwerkverbands so zu betreiben, dass dieser insbesondere als so genannte (Mobil) Edge Cloud Computerumgebung betrieben werden kann. Beim Edge Computing beziehungsweise Edge Cloud Computing ist es auf vorteilhafte Weise möglich, die Teilressourcen der jeweiligen Netzwerkinstanzen für die Anwendung bereitzustellen. So können beispielsweise Verbindungen und somit eine Latenz oder Netzwerkverkehr besonders kurz gehalten werden, daher der Name Edge für Rand, also vom Rand des Computernetzwerkverbands zu dem Standort. So ergeben sich weitere Vorteile beispielsweise durch effiziente Kopiervorgänge der zu transportierenden Daten, zusätzlich zu den Vorteilen einer gewöhnlichen Cloud, also denen eines großen Netzwerkinstanzenverbunds beziehungsweise des Computernetzwerkverbands, wie beispielsweise eine hohe Kapazität an Rechenleistung. So ist ein weiterer Vorteil bei einer Edge-Cloud sich bewegender Knoten, welche als Satelliten oder Pseudosatelliten (Drohnen, Ballone) ausgebildet sind, dass die Antwortzeit der Kommunikation im Vergleich zu einem konventionellen Cloudsystem um quasi die Hälfte reduziert werden kann. So kommunizieren bei dem konventionellen Cloudsystem die Satelliten mit einer Bodenstation, welche Ressourcen bereitstellt, wobei die Satelliten selbst quasi nur als Relais dienen, das heißt die Daten beziehungsweise Datenpakete müssen dabei den Weg von der Recheneinrichtung (auch RemoteSite genannt) zum Satelliten weiter zur Bodenstation und zurück, satt erfindungsgemäß einfach nur von der Recheneinrichtung zum Satelliten und zurück. Sind die jeweiligen Netzwerkinstanzen, wie oben bereits genannt, beispielsweise als Drohne und/oder Satellit oder dergleichen ausgebildet, ergibt sich der Vorteil, insbesondere bei einer besonders großen Anzahl an Netzwerkinstanzen, dass diese beispielsweise vorteilhaft für globale Internet der Dinge Dienste (IoT) eingesetzt werden können. Dabei kann durch das Verfahren vorteilhafterweise auch beispielsweise eine Automatisierung an beliebigen Standorten, insbesondere auf der Erde, erfolgen.

Der Vorteil insbesondere gegenüber dem bisherigen Stand der Technik ist, dass im Gegensatz zu diesem sich bewegende Hardware, in Form der Netzwerkinstanzen beziehungsweise Knoten, eingesetzt werden kann und beispielsweise dynamische Aspekte durch den Einsatz von Virtual Private Cloud Umgebungen in dem Computernetzwerkverband eingeführt werden. So kann beispielsweise die Leistungskennzahl des Computernetzwerkverbunds besonders vorteilhaft genutzt werden beziehungsweise besonders hoch ausfallen.

Ferner ist ein Vorteil des erfindungsgemäßen Verfahrens, dass ein sich quasi, aufgrund der Topologieänderung, stetig neu gestalteter Computernetzwerkverband besonders effizient zum Bereitstellen verwendet werden kann. Da die Topologieänderung auch nach bekanntem Muster erfolgen kann - und in der Regel auch erfolgt - kann eine Vorhersage und damit eine optimale Bereitstellung schon vorab, insbesondere für zumindest einen Teil des Zeitintervalls, kalkuliert werden. Beispielsweise weisen Satelliten, welche als Knoten verwendet werden beziehungsweise ausgebildet sind, häufig periodische Orbits auf. So könnten sich Topologien zu späteren Zeitpunkten wiederholen. Das Wiederholen hängt dabei maßgeblich von den Orbits der Satelliten und auch der Anzahl der Satelliten ab - Wiederholungen können also vorkommen, müssen es aber nicht. Das Verfahren funktioniert in jedem Fall, ob sich Topologien wiederholen oder nicht, da beispielsweise durch bekannten Orbitdaten (TLE) die Topologie zu jedem Zeitpunkt berechnet beziehungsweise vorhergesagt werden kann.

So bietet das erfindungsgemäße Verfahren eine vorteilhafte Methode, um mit wechselnden Ressourcen für eine Edge Cloud Infrastruktur eine Bereitstellung der Infrastruktur besonders vorteilhaft zu ermöglichen. Ferner ermöglicht das Verfahren das Bereitstellen zumindest eines Teils der Computerressourcen insbesondere als Virtual Private Cloud, welche einen bei Bedarf konfigurierbaren Pool von gemeinsam genutzten Computerressourcen, die innerhalb einer öffentlichen Cloud-Umgebung zugewiesen werden und ein gewisses Maß an Isolierung zwischen den verschiedenen Nutzern (beispielsweise Anwendungen) der Ressourcen gewährleisten. Darüber hinaus ist durch das Verfahren vorteilhafterweise eine Verknüpfung der Anwendung mit einem spezifischen Standort, insbesondere bei Bedarf, möglich. Ferner können durch das Verfahren die Computerressourcen dynamisch durch die jeweiligen Teilressourcen der jeweiligen Netzwerkinstanzen bereitgestellt werden, wobei dadurch beispielsweise auch ein geplantes Austauschen und/oder Verlegen und/oder Klonen und/oder Verschieben der Anwendung auf die jeweilige Netzwerkinstanz möglich ist. Somit wird durch das Verfahren ein besonders dynamischer Einsatz von Kommunikations- und Netzwerkinfrastrukturen, insbesondere in Form des Computernetzwerkverbunds, möglich.

Zusammenfassend wird durch das erfindungsgemäße Verfahren ein Teil von Computerressourcen durch verschiedene Netzwerkinstanzen, welche insbesondere jeweils zu dem Standort und relativ zueinander beweglich ausgebildet sind und somit einen dynamischen Ressourcenpool bilden, insbesondere in Abhängigkeit von deren jeweiliger Relativbewegung zum Standort und somit zu der Trajektorie eine jeweilige Teilressource insbesondere an Rechenleistung, Speicher und Kommunikation für die Anwendung der Recheneinrichtung bereitgestellt. Dabei verändern die Netzwerkinstanzen durch ihre Beweglichkeit, insbesondere ständig, aber beispielsweise für den Fall von Satelliten insbesondere auch periodisch sich wiederholend, ihre Topologie, also ihre Lage und Anordnung im Raum. Ferner kann der jeweilige Leistungswert der jeweiligen Netzwerkinstanz ein individueller sein, das heißt, dass sich die insbesondere zu beliebigen Zeitpunkten vollständig erbringbare Teilressource der jeweiligen Netzwerkinstanz an den Gesamtcomputerressourcen unterscheidet. So können für den Fall, dass beispielsweise sich die Anforderungen der Anwendung oder die Anwendung selbst ändert beziehungsweise neue Anwendungen Computerbedarf für einen Teil der Computerressourcen aufweisen, die Netzwerkknoten und insbesondere ihre bereitgestellte Teilressource jeweils auf besonders vorteilhafte Weise neu konfiguriert werden.

Ferner können die sich bewegenden Netzwerkinstanzen beispielsweise jeweils zu ihrem aktuellen Aufenthaltsort eine Anwendung beispielsweise für eine bestimmte Recheneinrichtung bereitstellen und, während sie sich bewegen, an einem anderen Standort für eine weitere Recheneinrichtung eine weitere Anwendung bereitstellen, wobei vorteilhafterweise der für die jeweilige Anwendung benötigte Datenstrom vorteilhaft zwischen den Netzwerkinstanzen ausgetauscht wird. Dabei kann die Kommunikation zwischen der Recheneinrichtung und/oder der weiteren Recheneinrichtung und dem Computernetzwerkverbund beispielsweise jeweils über eine bestimmte Netzwerkinstanz erfolgen, welche beispielsweise jeweils dem jeweiligen Standort am nächsten ist. Zusätzlich oder darüber hinaus kann die Kommunikation auch zu mehreren Netzwerkinstanzen erfolgen, was insbesondere in Abhängigkeit von der Kommunikation beziehungsweise der Verfügbarkeit beziehungsweise der Kommunikationsreichweite der Netzwerkinstanzen untereinander abhängig sein kann.

In vorteilhafter Ausgestaltung der Erfindung ist die wenigstens eine Netzwerkinstanz als Satellit ausgebildet, welcher sich insbesondere in einer niedrigen Erdumlaufbahn und/oder einer mittleren Erdumlaufbahn relativ zu dem Standort bewegt. Mit anderen Worten umfasst ein Satellit insbesondere eine Recheneinrichtung, welche als die Netzwerkinstanz betrieben werden kann. Zusätzlich oder alternativ kann wenigstens eine weitere der Netzwerkinstanzen des Computernetzwerkverbunds beispielsweise als Drohne und/oder Ballon oder beispielsweise als Satellitenballon ausgebildet sein. Dabei können diese als Pseudosatelliten aufgefasst werden. Wobei ein Pseudosatellit hier als ein Objekt zu verstehen ist, welches erdnaher als ein normaler Satellit ist und nur temporär vorhanden sein kann. Dies kann beispielsweise mittels eines Ballons, oder der Drohne, welche insbesondere als Flugzeug-Drohne für große Höhne ausgebildet ist, oder Anderem realisiert werden. Dabei kann der Computernetzwerkverbund beziehungsweise Ressourcenpool als beliebige Kombination von Satelliten, Ballonen und Drohnen ausgebildet sein. Dadurch ist es auf besonders vorteilhafte Weise ermöglicht, ein besonders dynamisches Computernetzwerk zum Bereitstellen wenigstens eines Teils der Computerressourcen verwenden zu können.

In weiterer vorteilhafter Ausgestaltung der Erfindung umfassen die Computerressourcen und/oder die jeweilige Teilressource eine Rechenleistung, welche beispielsweise durch einen Prozessor bereitgestellt werden kann, und/oder einen flüchtigen, insbesondere beschreibbaren, Speicher, beispielsweise in Form eines RAMs, und/oder einen nicht-flüchtigen, insbesondere beschreibbaren, Speicher, beispielsweise in Form eines Flash-Speichers, und/oder eine Datenübertragungsrate, welche beispielsweise die maximal zu oder von der Netzwerkinstanz beziehungsweise von dem Computernetzwerkverbund an die Recheneinrichtung übertragbare Datenrate charakterisiert, und/oder eine Latenz, welche beispielsweise den Verzug beim Bereitstellen von Daten charakterisiert. Mit anderen Worten können die Computerressourcen beziehungsweise die jeweilige Teilressource eine Vielzahl unterschiedlichster Leistungen, insbesondere einzeln oder aber auch mehrere Leistungen zusammen, bereitstellen. Dadurch ist es auf besonders vorteilhafte Weise möglich, der sich an dem Standort befindenden Recheneinrichtung, insbesondere besonders bedarfsspezifisch, für die Anwendung die Computerressourcen bereitzustellen.

In weiterer vorteilhafter Ausgestaltung der Erfindung erfolgt das Ermitteln der für die Recheneinrichtung verfügbaren Computerressourcen in Abhängigkeit von einer Datenübertragungsrate, welche zwischen wenigstens einer der Netzwerkinstanzen und der Recheneinrichtung und/oder zwischen einer ersten Netzwerkinstanz der wenigstens zwei Netzwerkinstanzen und/oder einer weiteren Netzwerkinstanz der wenigstens zwei Netzwerkinstanzen verfügbar ist. Mit anderen Worten erfolgt das Bereitstellen der insbesondere durch die jeweilige Netzwerkinstanz als Teilressource zur Verfügung gestellte Teil der Computerressourcen in Abhängigkeit einer, insbesondere aktuell zu einem Zeitpunkt, insbesondere in dem Zeitintervall, verfügbaren Datenübertragungsrate, sodass die Computerressourcen besonders effizient bereitgestellt werden können.

In weiterer vorteilhafter Ausgestaltung der Erfindung wird während des Bereitstellens der Computerressourcen der jeweilige Anteil der jeweiligen Teilressource an der bereitgestellten Computerressource dynamisch in Abhängigkeit der jeweiligen Instanzenverfügbarkeit angepasst. Mit anderen Worten erfolgt eine Verteilung des durch die Recheneinrichtung angeforderten Bedarfs derart, dass in Abhängigkeit von der Relativbewegung der jeweiligen Netzwerkinstanz und/oder insbesondere des Leistungswerts der jeweiligen Netzwerkinstanz eine Verteilung der bereitgestellten Computerressourcen zwischen den Netzwerkinstanzen beispielsweise insbesondere mittels Verschiebens und/oder Klonens und/oder Kopierens von Daten, welche für die Anwendung benötigt werden, oder dergleichen besonders effizient erfolgt. Somit ist es auf besonders vorteilhafte Weise möglich, den Computernetzwerkverbund als Edge Cloud betreiben zu können.

In weiterer vorteilhafter Ausgestaltung der Erfindung werden die für die Anwendung benötigten Daten dynamisch zwischen den wenigstens zwei Netzwerkinstanzen, insbesondere in Abhängigkeit von der jeweiligen Instanzenverfügbarkeit, übertragen beziehungsweise insbesondere migriert. Mit anderen Worten erfolgt eine Lastverteilung zwischen den Netzwerkinstanzen dynamisch. Somit kann auf besonders vorteilhafte Weise zumindest ein Teil der Computerressourcen des Computernetzwerkverbunds an die Recheneinrichtung bereitgestellt werden.

Ein zweiter Aspekt der Erfindung betrifft eine Verwaltungseinheit, welche zum Durchführen des erfindungsgemäßen Verfahrens ausgebildet ist. Die Verwaltungseinheit weist dazu vorteilhafterweise wenigstens eine Recheneinrichtung und geeignete Kommunikationsschnittstellen beziehungsweise Kommunikationsmittel auf, um insbesondere mit wenigstens einer der Netzwerkinstanzen und der sich an dem Standort befindenden Recheneinrichtung zu kommunizieren und/oder Daten auszutauschen.

In vorteilhafter Ausgestaltung ist die Verwaltungseinheit eine Komponente eines Satelliten und/oder einer Drohne und/oder eines Ballons, insbesondere eines Satellitenballons, welcher beziehungsweise welche insbesondere als eine der Netzwerkinstanzen ausgebildet ist. Das heißt, die Verwaltungseinheit kann selbst eine Komponente beispielsweise der Netzwerkinstanz sein und/oder mit dieser in direkter Wirkverbindung stehen, wodurch das Verfahren besonders effizient durchgeführt werden kann.

Ein dritter Aspekt der Erfindung betrifft ein System, welches wenigstens die Verwaltungseinheit und wenigstens eine Netzwerkinstanz umfasst.

Ein vierter Aspekt der Erfindung ist ein erfindungsgemäßes Computerprogramm, welches ein erfindungsgemäßes Verfahren auf einer elektronischen Recheneinrichtung implementiert. Das Computerprogramm kann hierbei auch in Form eines Computerprogrammprodukts vorliegen, welches direkt in einen Speicher einer Recheneinrichtung ladbar ist, mit Programm-Mitteln, um ein erfindungsgemäßes Verfahren auszuführen, wenn das Computerprogrammprodukt insbesondere in einer Recheneinrichtung ausgeführt wird.

Ein fünfter Aspekt der Erfindung betrifft einen elektronisch lesbaren Datenträger. Dabei umfasst der erfindungsgemäße elektronisch lesbare Datenträger auf ihm gespeicherte elektronisch lesbare Steuerinformationen, welche zumindest ein erfindungsgemäßes Computerprogramm umfassen oder derart ausgestaltet sind, dass sie bei Verwendung des Datenträgers in einer Steuereinrichtung beziehungsweise in einer elektronischen Recheneinrichtung ein erfindungsgemäßes Verfahren durchführen.

Die bisher und im Folgenden angegebenen Eigenschaften und Weiterbildungen des erfindungsgemäßen Verfahrens sowie die entsprechenden Vorteile sind jeweils sinngemäß auf die erfindungsgemäße Verwaltungseinheit und/oder zur Durchführung des erfindungsgemäßen Verfahrens verwendete Netzwerkinstanzen übertragbar und umgekehrt. Aus diesem Grund wird vorliegend auf eine jeweilige explizite Ausformulierung der jeweiligen Merkmale sowohl für das erfindungsgemäße Verfahren als auch für die erfindungsgemäße Verwaltungseinheit und/oder das System verzichtet.

Weitere Vorteile, Merkmale und Einzelheiten der Erfindung ergeben sich aus der nachfolgenden Beschreibung eines bevorzugten Ausführungsbeispiels sowie anhand der Zeichnung.

Es zeigt:

FIG 1    eine schematische Darstellung eines Computernetzwerkverbunds mit mehreren Netzwerkinstanzen sowie eine sich an einem Standort befindende elektronische Recheneinrichtung zu einem ersten Zeitpunkt;

FIG 2    eine schematische Darstellung des Computernetzwerkverbunds der FIG 1 zu einem zweiten Zeitpunkt; und

FIG 3    eine schematische Darstellung des Computernetzwerkverbunds der FIG 1 zu einem dritten Zeitpunkt.

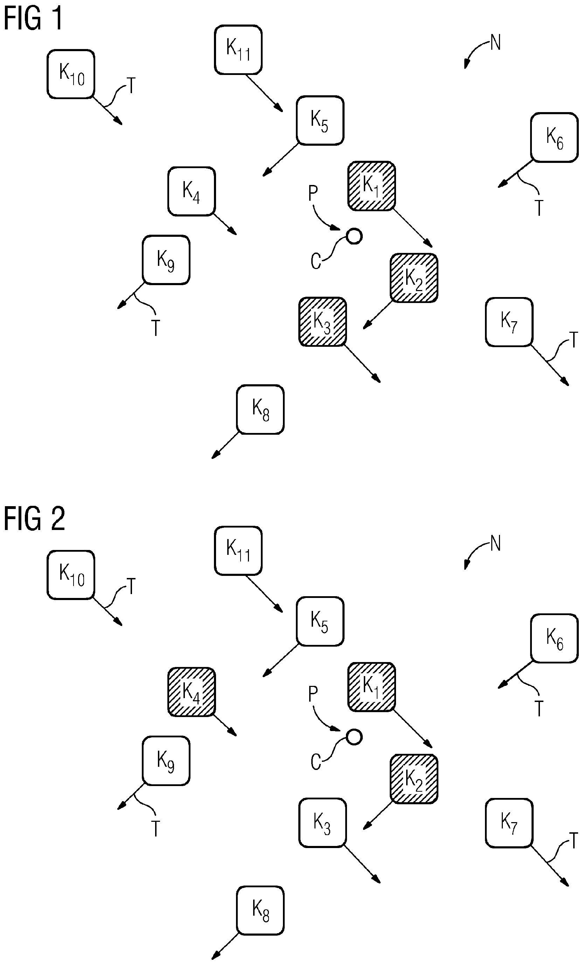

FIG 1 zeigt eine schematische Darstellung eines Computernetzwerkverbunds N, welcher aus wenigstens zwei Netzwerkinstanzen $K_i$ ($K_1$ bis $K_n$, mit n=ll). Dabei ist die jeweilige Netzwerkinstanz $K_i$ jeweils beweglich relativ zu einem Standort P ausgebildet, an welchem sich eine, insbesondere elektronische, Recheneinrichtung C befindet.

Im Folgenden soll nun ein Verfahren vorgestellt werden, durch welches Computerressourcen des Computernetzwerkverbunds N an die sich an dem Standort P befindende Recheneinrichtung C bereitgestellt werden, wobei die Recheneinrichtung C nicht Teil des Computernetzwerkverbunds N ist, sondern eine Netzwerkverbindung, insbesondere mittels geeigneter Kommunikationsmittel, wie beispielsweise einer Funkverbindung, mit dem Computernetzwerkverbund N kommunizieren kann. Dabei stellen die Netzwerkinstanzen $K_i$ jeweils zumindest eine Teilressource der Computerressourcen des Computernetzwerkverbunds N bereit.

Dabei soll das Bereitstellen der Computerressourcen an die, insbesondere elektronische, Recheneinrichtung C besonders vorteilhaft an die Recheneinrichtung C, welche sich an dem Standort befindet, erfolgen, sodass die Computerressourcen effizient eingesetzt werden können. Der Standort P ist insbesondere relativ zur Erde fest, kann aber beispielsweise für den Fall, dass die Recheneinrichtung C Teil eines Bootes, Flugzeugs und/oder Autos ist, sich auch relativ zur Erde bewegen. Dabei kann der Computernetzwerkverbund N beispielsweise als eine Computerwolke, eine so genannte Cloud, betrachtet werden, das heißt, die Netzwerkinstanzen $K_i$ sind insbesondere derart ausgebildet, dass sie über geeignete Schnittstellen beziehungsweise Kommunikationsmittel insbesondere, wie für einen Computernetzwerkverbund typisch, untereinander kommunizieren können.

Dabei ist der Computernetzwerkverbund N, insbesondere aufgrund der Beweglichkeit der Netzwerkinstanzen $K_i$, dynamisch aufgebaut, da die Netzwerkinstanzen $K_i$ beispielsweise jeweils eine Komponente eines Satelliten und/oder einer Drohne und/oder eines Ballons sind. Insbesondere für den Fall von Satelliten, welche sich insbesondere in einer niedrigen Erdumlaufbahn und/oder einer mittleren Erdumlaufbahn relativ zu dem Standort P bewegen, ist die jeweilige Teilressource der jeweiligen Netzwerkinstanz $K_i$ beziehungsweise deren Verfügbarkeit an dem Standort P abhängig von ihrem aktuellen Aufenthaltsort. Das heißt, der Computernetzwerkverbund N ist derart ausgebildet, dass sich seine Topologie, also die Anordnung der Netzwerkinstanzen $K_i$ relativ zueinander und insbesondere relativ zu dem Standort P im Raum, stetig ändert. Dadurch ergibt sich, dass eine Netzwerkinstanz $K_i$ immer wieder andere Netzwerkinstanzen $K_i$ in ihrer näheren Umgebung, sozusagen als Nachbarn, erhält und Routen, welche durch die Relativbewegung T und somit durch die jeweilige Trajektorie der jeweiligen Netzwerkinstanz $K_i$ vorgegeben sind, geändert werden. Mit der dadurch gegeben Dynamik des Computernetzwerkverbunds N und insbesondere die jeweilige Verfügbarkeit der jeweiligen Teilressource der jeweiligen Netzwerkinstanz $K_i$ entsteht eine besondere Herausforderung für das Bereitstellen der Computerressourcen an die Recheneinrichtung C.

Dabei umfasst das Verfahren mehrere Schritte. In einem ersten Schritt S1 des Verfahrens erfolgt ein Erfassen einer Relativbewegung T zu dem Standort P, welche als eine Trajektorie beschrieben werden kann und wenigstens eine Relativposition zu einem Zeitpunkt umfasst. Zusätzlich oder alternativ wird ein die Teilressource charakterisierenden Leistungswert R wenigstens einer der Netzwerkinstanzen erfasst.

In einem zweiten Schritt S2 des Verfahrens erfolgt ein Erfassen eines Bedarfswerts A, welcher einen Bedarf an zumindest einem Teil der Computerressourcen für eine auf der Recheneinrichtung C durchgeführte Anwendung charakterisiert. Ferner erfolgt dabei ein Erfassen eines Zeitintervalls $t_{start}$ bis $t_{end}$, innerhalb dessen der Bedarf durch die Recheneinrichtung C zum Durchführen der Anwendung vorhanden ist. Dabei kann die Anwendung beispielsweise insbesondere ortsgebunden und somit abhängig von dem Standort P sein. Dabei ist anzumerken, dass es sich bei der Recheneinrichtung C beispielsweise auch um eine Komponente für das Internet der Dinge (Internet of Things, IoT) handeln kann, sodass die Recheneinrichtung C beispielsweise auch als Sensor und/oder Teil einer Sensoreinheit ausgebildet sein kann.

In einem dritten Schritt S3 des Verfahrens erfolgt ein Ermitteln einer jeweiligen Instanzenverfügbarkeit der jeweiligen Netzwerkinstanz $K_i$, wobei die Instanzenverfügbarkeit den durch die jeweilige Netzwerkinstanz $K_i$ zur Verfügung stellbaren Teil der Teilressource der jeweiligen Netzwerkinstanz $K_i$ an dem Standort P für wenigstens einen Zeitpunkt $t_i$ in dem Zeitintervall $t_{start}$ bis $t_{end}$ charakterisiert. Dabei erfolgt das Ermitteln in Abhängigkeit von zumindest der jeweiligen Relativbewegung T und/oder dem jeweiligen Leistungswert R, welcher die Teilressource charakterisiert. Ferner können beispielsweise bei dem Ermitteln der jeweiligen Instanzenverfügbarkeit auch bereits auf der Recheneinrichtung C laufende weitere Anwendungen oder ferner beispielsweise wenigstens eine Anwendung, welche auf einer weiteren Recheneinrichtung, welche sich insbesondere am Standort P oder an einem weiteren Standort befindet, berücksichtigt werden.

In einem vierten Schritt S4 des Verfahrens wird eine Gesamtverfügbarkeit in Abhängigkeit von der jeweiligen Instanzenverfügbarkeit der für die Recheneinrichtung C verfügbaren Computerressourcen ermittelt. Das heißt, in dem Schritt S4 erfolgt das Ermitteln einer Gesamtübersicht der meisten, von dem Standort P insbesondere direkt, zusätzlich oder alternativ auch indirekt, erreichbaren Netzwerkinstanzen $K_i$.

Schließlich wird in einem fünften Schritt S5 des Verfahrens zumindest ein Teil der verfügbaren Computerressourcen an die Recheneinrichtung C in Abhängigkeit von dem Bedarfswert A und/oder der Gesamtverfügbarkeit, insbesondere zumindest über die Kommunikationseinrichtungen beziehungsweise Schnittstelle der jeweiligen Netzwerkinstanz $K_i$ beziehungsweise der Recheneinrichtung C bereitgestellt.

Dabei umfassen die Computerressourcen und/oder insbesondere die jeweilige Teilressource eine Rechenleistung c und/oder einen flüchtigen Speicher m und/oder einen nicht-flüchtigen Speicher s und/oder eine Datenübertragungsrate l und/oder eine Latenz. Ferner wird beispielsweise in den Schritten S3 und/oder S4 des Verfahrens der für die Recheneinrichtung C verfügbare Computerressourcen die insbesondere jeweilige Datenübertragungsrate berücksichtigt, welche zwischen wenigstens einer der Netzwerkinstanzen $K_i$ und der Recheneinrichtung C und/oder zwischen einer ersten Netzwerkinstanz $K_{i-1}$ der wenigstens zwei Netzwerkinstanzen $K_i$ und einer weiteren Netzwerkinstanz $K_i$ der wenigstens zwei Netzwerkinstanzen $K_i$ verfügbar ist.

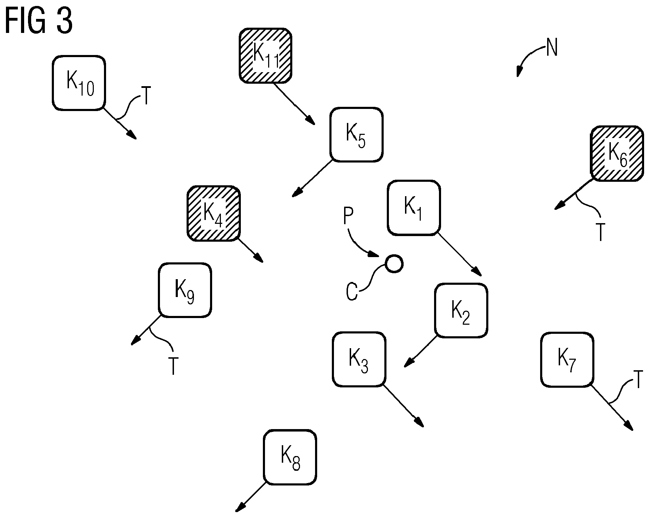

FIG 1 bis FIG 3 zeigen jeweils den Computernetzwerkverbund N zu einem Zeitpunkt. So zeigt FIG 1 den Computernetzwerkverbund N zum Zeitpunkt $t_1$, FIG 2 zum Zeitpunkt $t_2$ und FIG 3 zum Zeitpunkt $t_3$. Dabei können für das Ausführungsbeispiel beispielsweise die drei Zeitpunkte $t_1$, $t_2$, $t_3$ in dem Zeitintervall $t_{start}$ bis $t_{end}$ liegen. So zeigt FIG 1 die Netzwerkinstanzen $K_i$, welche jeweils die Relativbewegung T durchführen, beziehungsweise sich auf den Trajektorien befindenden. Die Recheneinrichtung C am Standort P befindet sich nun in einem Kommunikationsbereich mit nur beispielsweise einer Teilmenge der Netzwerkinstanzen $K_i$ für den Zeitpunkt $t_i$. So ist in FIG 1 der am Standort P verfügbare Ressourcenpool beispielsweise durch die schraffiert dargestellten Netzwerkinstanzen $K_1$, $K_2$ und $K_3$ gegeben. Die Recheneinrichtung C kann quasi ein beliebiges, insbesondere bodengebundenes, Gerät beispielsweise mit einem Sensor sein, welches in der Lage ist, mit den als Satelliten ausgebildeten Netzwerkknoten $K_i$, wie bereits erwähnt, zu kommunizieren. Die Anwendung soll durch das Verwenden der Computerressourcen, welche von dem Netzwerkverbund N bereitgestellt werden, als so genannte Cloud- beziehungsweise insbesondere Edge-Cloud-Anwendung durchführbar sein. Das heißt, die Anwendung nutzt nicht nur die Kapazität der Recheneinrichtung C, sondern eben des Computerverbunds N. Der Ressourcenpool, also die Topologie des Netzwerkverbunds N, ändert sich, wie in FIG 2 für eine Zeit $t_{i+1}$, also im Beispiel $t_2$, und wie in FIG 3 für eine Zeit $t_{i+2}$, also im Beispiel $t_3$, dargestellt. Zum Zeitpunkt $t_{i+1}$, also in FIG 2, ist die verfügbare Topologie des Computernetzwerkverbunds N dergestalt, dass am Standort P die Netzwerkinstanzen $K_1$, $K_2$ und $K_4$ genutzt werden können, das heißt, diese befinden sich in Kommunikationsreichweite zum Standort P, und zum Zeitpunkt $t_{i+2}$, also in FIG 3, sind die Netzwerkinstanzen $K_4$, $K_6$ und $K_{11}$ nutzbar.

Zum Bestimmen beziehungsweise Ermitteln der verfügbaren Teilressourcen beziehungsweise der jeweiligen Instanzenverfügbarkeit kann beispielsweise eine Verwaltungseinheit, welche beispielsweise selbst als Recheneinrichtung und/oder als eine Komponente einer der Netzwerkinstanzen $K_i$ ausgebildet ist, verwendet werden. Dabei kann das Ermitteln derart geschehen, dass die am Standort P von der Anwendung, unter Berücksichtigung des Bedarfswerts A, benötigte Anwendungsanforderung für eine besonders große Anzahl, insbesondere besonders eine vollständige Anzahl, der Netzwerkinstanzen $K_i$ und dem Zeitrahmen, also dem Zeitintervall $t_{start}$ bis $t_{end}$ abgeleitet wird.

Vorteilhafterweise wird wenigstens für zwei, aber insbesondere vorteilhafterweise für möglichst viele Zeitpunkte innerhalb des Zeitintervalls $t_{start}$ bis $t_{end}$, eine Vorhersage getroffen, wobei in Abhängigkeit von dieser Prognose beispielsweise auch der Zeitpunkt $t_{end}$ angepasst werden kann, falls beispielsweise eine der Netzwerkinstanzen $K_i$ länger oder kürzer im Kommunikationsbereich des Standorts P liegt. Dabei wird für die Bestimmung beziehungsweise Ermittlung der jeweiligen Instanzenverfügbarkeit beziehungsweise der Gesamtverfügbarkeit beispielsweise das Zeitintervall $t_{start}$ bis $t_{end}$ in mehrere Intervalle unterteilt, für die jeweils eine Topologie und somit eine Verfügbarkeit der Netzwerkinstanzen $K_i$ des Computernetzwerkverbunds N bekannt beziehungsweise bestimmbar ist. Dies zeigt (1):

$$[t_{start}, t_{end}] = \{[t_{start}, t_1], [t_1, t_2], \ldots, [t_n, t_{end}]\} \qquad (1)$$

Jedes der weiteren Zeitintervalle erhält die jeweils in dem Intervall verfügbaren Teilressourcen, welche insbesondere über die jeweilige Instanzenverfügbarkeit ausgedrückt sind, sodass man schreiben kann, mit "position in range of P" als "in Kommunikationsreichweite zum Standort P":

$$[t_{start}, t_1] \rightarrow \quad K_0 := \{K_n \mid position(K_n, t \in [t_{start}, t_1]) \text{ in range of "P"}\} \qquad (2)$$

$$[t_1, t_2] \rightarrow \quad K_1 := \{K_n \mid position(K_n, t \in [t_1, t_2]) \text{ in range of "P"}\} \qquad (3)$$

$$\cdots$$

$$[t_n, t_{end}] \rightarrow \quad K_m := \{K_n \mid position(K_n, t \in [t_n, t_{end}]) \text{ in range of "P"}\} \qquad (4)$$

Dabei kann das Zerteilen des Zeitintervalls $t_{start}$ bis $t_{end}$ in die Teilintervalle durch die Verwaltungseinheit durchgeführt werden, wobei diese entweder beispielsweise zentral oder dezentral ausgebildet sein kann und darüber hinaus ausgebildet sein kann, die Netzwerkinstanzen $K_i$ zu steuern beziehungsweise zu regeln. Ferner ist es möglich, dass die Verwaltungseinheit auf einem der Satelliten angeordnet ist.

Insbesondere die Schritte S4 und S5 des Verfahrens umfassen nun eine Zuordnung der Anwendungsanforderung, also des Bedarfswerts A, zu der verfügbaren Gesamtverfügbarkeit. Dabei werden insbesondere die zu einem der weiteren Zeitintervalle jeweiligen Instanzenverfügbarkeiten für den Standort P oder beliebige weitere Standorte betrachtet. Dabei kann eine insbesondere detaillierte Zuordnung des angeforderten Bedarfs an Computerressourcen zu den bereitgestellten beziehungsweise bereitstellbaren Computerressourcen beziehungsweise der Gesamtverfügbarkeit erfolgen, wobei dies insbesondere im Hinblick auf eine Optimierung entlang verschiedener beispielsweise Leistungskennzahlen (key performance indicator, KPI) geschehen kann.

Dies lässt sich wie folgt darstellen:

$$[t_{start}, t_1] \rightarrow K_{a0} := \{K_n \in K_0 \mid f(A(R(c,m,s,l), P), K_n(c, m, s, l, T)) == true\} \quad (5)$$

$$[t_1, t_2] \rightarrow K_{a1} := \{K_n \in K_1 \mid f(A(R(c,m,s,l), P), K_n(c, m, s, l, T)) == true \} \quad (6)$$

$$\cdots$$

$$[t_n, t_{end}] \rightarrow K_{am} := \{K_n \in K_m \mid f(A(R(c,m,s,l), P), K_n(c, m, s, l, T)) == true \} \quad (7),$$

wobei: $K_{a0}$, $K_{a1}$, $K_{am}$ die für die auf der Recheneinrichtung C durchzuführende Anwendung verfügbaren Ressourcen im jeweils entsprechenden weiteren Zeitintervall beziehungsweise Teilintervall sind.

Ferner repräsentieren $K_0$, $K_1$, $K_n$ die Gesamtverfügbarkeit im jeweiligen Zeitfenster beziehungsweise Zeitintervall.

Die Funktion f stellt eine Mapping-Funktion dar, welche den Bedarfswert A und die durch die jeweilige Netzwerkinstanz aktuell verfügbaren, die Teilressource charakterisierenden Leistungswert R einen booleschen Wert, insbesondere in Form von True (Wahr) oder False (Falsch) zurückgibt, wenn die entsprechende Netzwerkinstanz $K_i$ die Ressourcenanforderung, also den Bedarfswert A erfüllt oder nicht erfüllt.

Durch das hier vorgestellte Verfahren kann für jedes Zeitintervall auch für mehrere Anwendungen, insbesondere auch mehrerer, wie die Recheneinrichtung C ausgebildeter Recheneinrichtungen berechnet beziehungsweise bestimmt werden, insbesondere sobald eine Menge an jeweiligen Instanzenverfügbarkeiten und somit der verfügbaren aktuellen Menge der jeweiligen Teilressource und somit deren Summe als Gesamtverfügbarkeit groß genug ist, um verschiedene Auswahlmöglichkeiten anzubieten, wie beispielsweise

$$[t_1, t_2] \rightarrow K_{a1\_1}, K_{a1\_2}, K_{a1\_3}.$$

Um mit dem Verfahren die bereitzustellende Computerressource besonders vorteilhaft insbesondere derart zu verteilen, dass der jeweilige Anteil der jeweiligen Teilressource an der bereitgestellten Computerressource dynamisch in Abhängigkeit der jeweiligen Instanzenverfügbarkeit angepasst wird. Zusätzlich oder darüber hinaus können für die Anwendung benötigte Daten dynamisch zwischen den wenigstens zwei Netzwerkinstanzen, insbesondere in Abhängigkeit von der jeweiligen Instanzenverfügbarkeit, übertragen und/oder migriert werden, wodurch das Verfahren insbesondere besonders dynamisch durchgeführt werden. Bei der dynamischen Durchführung erfolgt beispielsweise eine Identifizierung geeigneter Anwendungs- und Infrastruktur- beziehungsweise Topologiebereitstellungsstrategien für den Umgang mit den sich, insbesondere stetig ändernden, aber beispielsweise auch nach bekanntem Muster periodisch wiederholenden Topologien des Computernetzwerkverbunds N.

So wird, um die Auswirkung der dynamischen Topologie des Computernetzwerkverbands N auf die Anwendung zu minimieren, beispielsweise eine Anzahl der Rekonfigurationen reduziert, indem auf Überschneidungen der zu verwendenden Teilressourcen der jeweiligen Netzwerkinstanzen über verschiedene Zeitintervalle hinweg geprüft wird. So kann beispielsweise:

$$[t_{start}, t_1] \rightarrow K_{a0\_1}, K_{a0\_2}, K_{a0\_3}, K_{a0\_4} \quad (8)$$

$$[t_1, t_2] \rightarrow K_{a1\_1}, K_{a1\_2}, K_{a1\_3}. \quad (9)$$

$$[t_2, t_3] \rightarrow K_{a2\_1}, K_{a2\_2}, K_{a2\_3}. \quad (10)$$

$$[t_3, t_4] \rightarrow K_{a3\_1}, K_{a3\_2}, K_{a3\_3}. \quad (11)$$

$$[t_4, t_{end}] \rightarrow K_{am\_1}, K_{am\_2}, K_{am\_3}, K_{am\_4} \quad (12)$$

beispielsweise das Verteilen beziehungsweise Zuweisen und somit das Bereitstellen der Computerressource für den Fall $K_{a0\_1}=K_{a1\_}1=S1$ und $K_{a2\_2}=K_{a3\_3}=K_{am\_4}=S2$ die jeweiligen Zeitintervalle beziehungsweise Zeitfenster vereinfacht ausgedrückt werden als:

$$[t_{start}, t_1] \rightarrow S_1 \quad (13)$$

$$[t_1, t_2] \rightarrow S_1 \quad (14)$$

$$[t_2, t_3] \rightarrow S_2 \quad (15)$$

$$[t_3, t_4] \rightarrow S_2 \quad (16)$$

$$[t_4, t_{end}] \rightarrow S_2 \quad (17)$$

Sobald also die Zuordnung der jeweiligen Teilressourcen, welche die Bedarfsanfrage am Standort P der Recheneinrichtung C decken, durchgeführt ist, kann, insbesondere strategisch, für beispielsweise die Migration der Daten bestimmt werden, wie diese und insbesondere zwischen welchen Netzwerkinstanzen $K_i$ diese erfolgen kann. Dabei ist das vorgestellte Verfahren nicht auf einen Migrationsansatz beschränkt, so kann eine entsprechende, passende Migration gewählt werden. So sind beispielsweise Pre-Copy-Migration und Post-Copy-Migration möglich.

So kann durch das Verfahren nun beispielsweise eine Strategie für die Bereitstellung der für die Anwendung auf der Recheneinrichtung C benötigten Computerressource derart beispielsweise durch die Verwaltungseinheit durchgeführt werden, dass die nun ermittelten beziehungsweise erfassten Werte, welche insbesondere die Gesamtheit der jeweiligen Instanzenverfügbarkeiten für quasi die Zeitpunkte $t_n$ beziehungsweise die zu den jeweiligen Zeitpunkten gehörenden Zeitintervalle bestimmen, übersetzen, sodass die Migration besonders vorteilhaft durchgeführt werden kann. Ferner können beispielsweise anschließend Deployment-Artefakte auf den entsprechenden Netzwerkinstanzen $K_i$ verteilt und beispielsweise Task-Ausführungspläne initialisiert werden. So kann insbesondere rechtzeitig gewährleistet werden, dass, wenn eine bestimmte Teilressource einer bestimmten Netzwerkinstanz $K_i$ auf einer weiteren Netzwerkinstanz $K_j$ benötigt wird, diese zwischen den Netzwerkinstanzen $K_i$ vorteilhaft übertragen werden. Dies kann beispielsweise zum einen durch eine direkte Verbindung erfolgen, wenn die beiden Netzwerkinstanzen $K_i$ sich in überlappender Kommunikationsreichweite befinden. Ferner kann dies auch beispielsweise durch eine weitere Netzwerkinstanz $K_j$ beispielsweise als eine Art Relaisstation durchgeführt werden, welche von beiden kontaktiert werden kann. So können beispielsweise die einzelnen Netzwerkinstanzen $K_i$, wie in einem Meshnetzwerk, in dem Computernetzwerkverbund N kommunizieren. Hat die Ermittlung des Bedarfs der Computerressourcen ergeben, dass sich eine der Netzwerkinstanzen $K_i$ nach ihrer Bewegung noch innerhalb des Intervalls $t_{start}$ bis $t_{end}$ wieder in Reichweite des Standorts P befindet, kann der Zustand, welcher für die Anwendung benötigt wird, beispielsweise in der Netzwerkinstanz $K_i$ gehalten werden, was beispielsweise ähnlich dem Cookie-Konzept einer Web-Anwendung realisiert werden kann.

Durch das hier vorgestellte Verfahren und das vorgestellte System aus den wenigstens zwei Netzwerkinstanzen $K_i$ und insbesondere der Verwaltungseinheit ist es möglich, den sich ständig dynamisch topologisch ändernden Computernetzwerkverbund N als leistungsfähigen Hardware-Ressourcenpool für Cloud Computing und insbesondere Edge Cloud Computing, insbesondere für den Fall von Satelliten, im Weltraum bereitzustellen.

**Patentansprüche**

1. Verfahren zum Bereitstellen von Computerressourcen eines Computernetzwerkverbunds (N) an wenigstens eine sich an einem Standort (P) befindende Recheneinrichtung (C), welche nicht Teil des Computernetzwerkverbunds (N) ist, wobei der Computernetzwerkverbund (N) durch wenigstens zwei Netzwerkinstanzen ($K_i$) gebildet wird, welche jeweils relativ zu dem Standort (P) beweglich sind und jeweils zumindest eine Teilressource der Computerressourcen bereitstellen, mit den Schritten:

   - Erfassen einer Relativbewegung (T) zum Standort (P) und/oder wenigstens eines Leistungswerts, welcher die Teilressource charakterisiert, wenigstens einer der Netzwerkinstanzen ($K_i$) ; (S1)
   - Erfassen eines Bedarfswerts, welcher einen Bedarf an zumindest einem Teil der Computerressourcen für eine auf der Recheneinrichtung (C) durchgeführte Anwendung charakterisiert, und eines Zeitintervalls, innerhalb welchem der Bedarf durch die Recheneinrichtung (C) vorhanden ist; (S2)
   - Ermitteln einer jeweiligen Instanzenverfügbarkeit, welche den durch die jeweilige Netzwerkinstanz ($K_i$) zu Verfügung stellbaren Teil der Teilressource der jeweiligen Netzwerkinstanz ($K_i$) an dem Standort (P) für wenigstens eine Zeitpunkt in dem Zeitintervall charakterisiert, in Abhängigkeit von zumindest der jeweiligen Relativbewegung (T) und/oder dem jeweiligen Leistungswert; (S3)
   - Ermitteln einer Gesamtverfügbarkeit in Abhängigkeit von der jeweiligen Instanzenverfügbarkeit der für die Recheneinrichtung verfügbaren Computerressourcen; (S4) und
   - Bereitstellen zumindest eines Teils der verfügbaren Computerressourcen an die Recheneinrichtung (C) in Abhängigkeit von dem Bedarfswert und/oder der Gesamtverfügbarkeit. (S5)

2. Verfahren nach Anspruch 1, **dadurch gekennzeichnet, dass** wenigstens eine der Netzwerkinstanzen ($K_i$) als Satellit ausgebildet ist, welcher sich insbesondere in einer niedrigen Erdumlaufbahn und/oder einer mittleren Erdumlaufbahn relativ zu dem Standort (P) bewegt.

3. Verfahren nach Anspruch 1 oder 2 **dadurch gekennzeichnet**, die Computerressourcen und/oder die jeweilige Teilressource eine Rechenleistung und/oder einen flüchtigen und/oder nicht-flüchtigen Speicher und/oder eine Datenübertragungsrate und/oder eine Latenz umfassen.

4. Verfahren nach einem der vorhergehenden Ansprüche, **dadurch gekennzeichnet, dass** das Ermitteln der für die Recheneinrichtung verfügbaren Computerressourcen in Abhängigkeit von der/einer Datenübertragungsrate erfolgt, welche zwischen der wenigstens einer der Netzwerkinstanz ($K_i$) und der Recheneinrichtung (C) und/oder zwischen einer ersten Netzwerkinstanz ($K_i$) der wenigstens zwei Netzwerkinstanzen ($K_i$) und einer weiteren Netzwerkinstanz ($K_i$) der wenigstens zwei Netzwerkinstanzen ($K_i$) verfügbar ist.

5. Verfahren nach einem der vorhergehenden Ansprüche, **dadurch gekennzeichnet, dass** während dem Bereitstellen der Computerressourcen der jeweilige Anteil der jeweiligen Teilressource an der bereitgestellten Computerressource dynamisch in Abhängigkeit der jeweiligen Instanzenverfügbarkeit angepasst wird.

6. Verfahren nach einem der vorhergehenden Ansprüche, **dadurch gekennzeichnet, dass** für die Anwendung benötigte Daten dynamisch zwischen den wenigstens zwei Netzwerkinstanzen ($K_i$), insbesondere in Abhängigkeit von der jeweiligen Instanzenverfügbarkeit, übertragen und/oder migriert werden.

7. Verwaltungseinheit, welche zum Durchführen eines Verfahrens nach einem der vorhergehenden Ansprüche ausgebildet ist.

8. Verwaltungseinheit nach Anspruch 7, **dadurch gekennzeichnet, dass** die Verwaltungseinheit eine Komponente eines Satelliten, eines Ballons und/oder einer Drohne ist, welcher beziehungsweise welche insbesondere als eine der Netzwerkinstanzen ($K_i$) ausgebildet ist.

9. Computerprogramm welches direkt in einen Speicher einer elektronischen Recheneinrichtung ladbar ist, mit Programm-Mitteln, um die Schritte des Verfahrens nach einem der Ansprüche 1 bis 6 auszuführen, wenn das Programm in einer Recheneinrichtung ausgeführt wird.

10. Elektronisch lesbarer Datenträger mit darauf gespeicherten elektronisch lesbaren Steuerinformationen, welche zumindest ein Computerprogramm nach Anspruch 9 umfassen und derart ausgestaltet sind, dass sie bei Verwendung des Datenträgers in einer elektronischen Recheneinrichtung ein Verfahren nach einem der Ansprüche 1 bis 6 durchführen.

FIG 1

K₁₀ T

K₁₁

K₅

N

K₆ T

K₄

P

K₁

C

K₂

K₉ T

K₃

K₇ T

K₈

FIG 2

K₁₀ T

K₁₁

K₅

N

K₆ T

K₄

K₉ T

P

K₁

C

K₂

K₃

K₇ T

K₈

FIG 3

$K_{10}$ T

$K_{11}$

$K_5$

N

$K_6$ T

$K_4$

P

$K_1$

C

$K_9$

T

$K_2$

$K_3$

$K_7$ T

$K_8$

Europäisches
Patentamt

European
Patent Office

Office européen
des brevets

# EUROPÄISCHER RECHERCHENBERICHT

Nummer der Anmeldung

EP 19 17 8234

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TI NGUYEN TI ET AL: "Joint Resource Allocation, Computation Offloading, and Path Planning for UAV Based Hierarchical Fog-Cloud Mobile Systems", 2018 IEEE SEVENTH INTERNATIONAL CONFERENCE ON COMMUNICATIONS AND ELECTRONICS (ICCE), IEEE, 18. Juli 2018 (2018-07-18), Seiten 373-378, XP033439495, DOI: 10.1109/CCE.2018.8465572 ISBN: 978-1-5386-3678-7 [gefunden am 2018-09-13] * Abstrakt; Seite 373 * * Abbildung 1 * * Seite 374, linke Spalte, Zeile 9 - Zeile 60 * * Seite 374, rechte Spalte, Zeile 1 - Zeile 40 * * Seite 375, linke Spalte, Zeile 33 - rechte Spalte, Zeile 53 * * Seite 375, rechte Spalte, Zeile 5 - Zeile 27 * * Algorithm 1; Seite 376 * * Seite 378, rechte Spalte, Zeile 13 - Zeile 18 *  ----- -/-- | 1-10 | INV. G06F9/50 H04L29/08 H04W4/02   RECHERCHIERTE SACHGEBIETE (IPC)  G06F H04W H04L |

Der vorliegende Recherchenbericht wurde für alle Patentansprüche erstellt

| Recherchenort | Abschlußdatum der Recherche | Prüfer |
|---|---|---|
| Den Haag | 27. November 2019 | Suzic, Bojan |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
     Dokument

EPO FORM 1503 03.82 (P04C03)

| | Europäisches Patentamt European Patent Office Office européen des brevets | **EUROPÄISCHER RECHERCHENBERICHT** | **Nummer der Anmeldung** EP 19 17 8234 |

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG ZHENJIANG ET AL: "Satellite Mobile Edge Computing: Improving QoS of High-Speed Satellite-Terrestrial Networks Using Edge Computing Techniques", IEEE NETWORK, IEEE SERVICE CENTER, NEW YORK, NY, US, Bd. 33, Nr. 1, 11. Januar 2018 (2018-01-11), Seiten 70-76, XP011704504, ISSN: 0890-8044, DOI: 10.1109/MNET.2018.1800172 [gefunden am 2019-01-11] * Abstrakt; Seite 70 * * Abbildungen 1,3,4 * * Seite 70, rechte Spalte, Zeile 20 - Zeile 40 * * Seite 72, linke Spalte, Zeile 19 - rechte Spalte, Zeile 5 * * Seite 73, linke Spalte, Zeile 3 - rechte Spalte, Zeile 40 * * Seite 74, linke Spalte, Zeile 1 - rechte Spalte, Zeile 50 * * Seite 76, linke Spalte, Zeile 1 - rechte Spalte, Zeile 27 * ----- | 1-10 | |
| A | CHEN WUHUI ET AL: "When UAV Swarm Meets Edge-Cloud Computing: The QoS Perspective", IEEE NETWORK, IEEE SERVICE CENTER, NEW YORK, NY, US, Bd. 33, Nr. 2, 27. März 2019 (2019-03-27), Seiten 36-43, XP011716521, ISSN: 0890-8044, DOI: 10.1109/MNET.2019.1800222 [gefunden am 2019-03-26] * das ganze Dokument * ----- -/-- | 1-10 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 27. November 2019 | Suzic, Bojan |

EPO FORM 1503 03.82 (P04C03)

Seite 2 von 3

Europäisches
Patentamt

European
Patent Office

Office européen
des brevets

## EUROPÄISCHER RECHERCHENBERICHT

Nummer der Anmeldung

EP 19 17 8234

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MILENA F PINTO ET AL: "A Framework for Analyzing Fog-Cloud Computing Cooperation Applied to Information Processing of UAVs", ARXIV.ORG, CORNELL UNIVERSITY LIBRARY, 201 OLIN LIBRARY CORNELL UNIVERSITY ITHACA, NY 14853, 10. Januar 2019 (2019-01-10), XP081004310, DOI: 10.1155/2019/7497924 * das ganze Dokument * ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 27. November 2019 | Suzic, Bojan |

EPO FORM 1503 03.82 (P04C03)

Seite 3 von 3